# EUROPÄISCHE PATENTSCHRIFT

(11) **EP 1 025 738 B1**
(45) Veröffentlichungstag und Bekanntmachung des Hinweises auf die Patenterteilung: **20.11.2002**
(21) Anmeldenummer: 98954197.4
(22) Anmeldetag: 18.09.1998
(51) Int. Cl.: H04Q 7/38

(54) **VERFAHREN UND SYSTEM ZUM ABSCHALTEN ELEKTRONISCHER GERÄTE, Z.B. MOBILTEILEN, IN SPERRZONEN**
METHOD AND SYSTEM FOR SWITCHING OFF ELECTRONIC DEVICES SUCH AS MOBILE UNITS IN PLACES WHERE THEIR USE IS FORBIDDEN
PROCEDE ET SYSTEME POUR ARRETER DES APPAREILS ELECTRONIQUES, PAR EXEMPLE DES UNITES MOBILES DANS DES ZONES INTERDITES

(30) Priorität: 07.10.1997 DE 19744263
(43) Veröffentlichungstag der Anmeldung: 09.08.2000
(73) Patentinhaber: SIEMENS AKTIENGESELLSCHAFT, 80333 München (DE)
(72) Erfinder: MADLE, Rene, A-2405 B.D. Altenburg (AT); FEITSCH, Alexander, A-1180 Wien (AT); POSTMANN, Erwin, A-7212 Forchtenstein (AT); STRAKA, Peter, A-1190 Wien (AT)
(86) Internationale Anmeldenummer: DE9802781
(87) Internationale Veröffentlichungsnummer: WO99018745

(56) Entgegenhaltungen:
- EP-A- 0 568 824
- WEISS K ET AL: "CONVENTIONAL LOCAL AREA RADIO COVERAGE SYSTEM" MOTOROLA TECHNICAL DEVELOPMENTS, Bd. 13, 1. Juli 1991, Seiten 67-69, XP000259225
- PROUDLER G: "AUTOMATICALLY DISABLING MOBILE COMMUNICATIONS DEVICES IN SENSITIVE LOCATIONS" RESEARCH DISCLOSURE, Nr. 391, November 1996, Seite 729 XP000680926

## Beschreibung

Die Erfindung bezieht sich auf ein Verfahren und ein System zum Abschalten von Funktionen eines elektronischen Gerätes gemäß dem Oberbegriff des Patentanspruchs 1 bzw. des Patentanspruchs 15.

Es ist bekannt, daß Mobilfunkgeräte und eine Anzahl anderer elektronischer Geräte, z.B. Rundfunkgeräte, CD-Player etc. hochfrequente Signale aussenden, die empfindliche Geräte beeinflussen können. Aus diesem Grunde ist es z.B. in Flugzeugen verboten, Mobilfunkgeräte in Betrieb zu nehmen bzw. im Stand-by-Modus zu belassen, um Störungen z.B. der Navigationssysteme zu vermeiden. Ähnliche Überlegungen gelten für bestimmte Bereiche in Krankenhäusern, wo die Gefahr einer Beeinflussung lebensüberwachender oder lebenserhaltender Systeme durch Funkwellen besteht.

Von den beschriebenen Sicherheitsaspekten abgesehen gibt es auch Bereiche, in welchen eine Inbetriebnahme elektronischer Geräte, einschließlich der sogenannten "Handys" unerwünscht ist, beispielsweise in Konzert- oder Kinosälen, Kirchen, etc. So sind aus den Aufsätzen "Conventional Local Area Radio Coverage System", in Motorola Technical Developments, Bd. 13, 1991, Seiten 67-69 und "Automatically Disabling Mobile Communications Devices in Sensitive Locations", in Research Disclosure, Nr. 391, 1996, Seite 729 Abschaltfunktionen in bestimmten Bereichen bekannt.

Die Erfindung hat sich die Aufgabe gesetzt, das automatische Abschalten elektronischer Geräte in derartigen Bereichen gegen mißbräuchliche Benutzung zu sichern.

Diese Aufgabe wird mit einem Verfahren bzw. einem System, ausgehend vom Abschalten elektronischer Geräte für Sperrzonen mittels eines Abschaltgerätes über eine Funkschnittstelle, dadurch gelöst, dass das Abschaltgerät einem Kommunikationsnetz zugeordnet wird und bei Inbetriebnahme des Abschaltgerätes dessen Authentifizierung dem Netz gegenüber gefordert wird. Dadurch ergibt sich eine Erhöhung der Sicherheit gegen mißbräuchliche Verwendung des Abschaltgeräts. Die Erfindung bietet den Vorteil, daß sie ein erzwungenes Abschalten erreicht und vor allem die Sicherheitsanforderungen berücksichtigt werden. Ob alle oder einige Funktionen des Gerätes abgeschaltet werden, hängt von der Art des Gerätes bzw. der Sperrzone ab. In Kino- oder Theatersälen wird es im allgemeinen ausreichend sein, den Tonruf eines Mobilteils stillzulegen.

Das erfindungsgemäße Verfahren bietet seine Vorteile besonders dann, falls das elektronische Gerät ein Mobilteil eines Mobilfunksystems ist. Solche Mobilteile erzeugen trotz verhältnismäßig geringer Hochfrequenzleistung in ihrer unmittelbaren Umgebung erhebliche Feldstärken.

Um dabei ein Abschalten auch dann zu ermöglichen, falls das Abschaltgerät kein zugehöriges Netz findet bzw. ein solches nicht vorhanden ist, kann gemäß einer bevorzugten Weiterbildung das Abschaltgerät dennoch Schaltbefehle abgeben. Dies wird beispielsweise öfter der Fall sein, falls sich das Abschaltgerät an Bord eines Flugzeuges befindet. Um eine längere mißbräuchliche Verwendung beispielsweise eines gestohlenen Abschaltgerätes zu vermeiden, kann man vorzugsweise auch vorsehen, daß nach mehrmaligem Aktivieren des Abschaltgerätes ohne Auffinden eines zugehörigen Netzes die Abgabe von Schaltbefehlen gesperrt wird.

Bei einer noch sichereren Variante kann die Forderung nach Authentifizierung des Abschaltgeräts seitens des elektronischen Geräts ausgelöst werden, nachdem dieses Schaltbefehle erhalten hat. Dabei ist es empfehlenswert, wenn seitens des Abschaltgerätes ein Indikatorsignal abgegeben wird, falls ein Netz - vorzugsweise ein Mobilfunknetz - die vorgesehene Authentifizierung nicht unterstützt. In diesem Fall erfolgt zwar kein Abschalten des Mobilteils, doch wird angezeigt, daß sich ein (nicht abgeschaltetes) Mobilteil in der Sperrzone befindet.

Im Sinne einer Vermeidung von Mißbräuchen und zur Erhöhung der Betriebssicherheit ist es von Vorteil, wenn die Schaltbefehle über einen vorgegebenen, für diesen Zweck reservierten Sicherheits-Signalisierungskanal gesendet werden.

Gleichfalls zur Erhöhung der Sicherheit ist es zweckmäßig, wenn der Erhalt der Schaltbefehle bzw. deren Durchführung an das Abschaltgerät bestätigt wird.

Es ist bei Mobilteilen keineswegs zwingend, daß die Schaltbefehle über dem Mobilfunksystem zugeordnete Kanäle erfolgen. Vielmehr können die Schaltbefehle bzw. deren Rückmeldungen über einen von dem Mobilfunk unabhängigen HF-Teil empfangen bzw. gesendet werden. Dabei können die Schaltbefehle bzw. deren Rückmeldungen in Frequenzbereichen gesendet werden, die von jenen des Mobilfunks verschieden sind. Dies hat den Vorteil, daß man Frequenzen wählen kann, die sicherheitstechnisch unbedenklich sind und beispielsweise auf Navigationssysteme keinen Einfluß oder wenig Einfluß haben.

Vorteilhafterweise können die Schaltbefehle bei privilegierten Mobilteilen eines Mobilfunksystems zumindest partiell ignoriert werden. Dadurch ist es möglich, z.B. spezialisiertes Personal in einem Sperrbereich in Notfällen zu erreichen.

In vielen Fällen ist es ausreichend und für die Benützer eines Mobilteils auch nicht tatsächlich störend, wenn mit Hilfe der Schaltbefehle lediglich der Tonruf eines Mobilteiles stillgelegt wird.

Insbesondere in Sicherheitszonen wird man jedoch vorsehen, daß mit Hilfe der Schaltbefehle sämtliche Funktionen des Mobilteils, ausgenommen der Empfang von Schaltbefehlen, stillgelegt werden.

Man kann vorsehen, daß das Stillegen von Funktionen auf Grund von Schaltbefehlen lediglich für eine vorgebbare Ruhedauer erfolgt, was beispielsweise dann erfolgen kann, wenn die Aufenthaltsdauer des elektronischen Gerätes bzw. seines Benutzers im vorhinein bekannt ist, was beispielsweise in Kinosälen üblicherweise anzunehmen ist. Dabei kann die Ruhedauer seitens des Abschaltgerätes dem elektronischen Gerät über die Funkschnittstelle mittels der Schaltsignale vorgegeben werden, damit eine Anpassung an wechselnde Verhältnisse, wie die Dauer eines Theaterstücks, möglich ist.

Bei einer zweckmäßigen Ausführungsform wird die Funkschnittstelle zwischen Abschaltgerät und elektronischem Gerät lediglich in einem Ein/Austrittsbereich der Sperrzone errichtet. Dadurch kann der übrige Bereich der Sperrzone frei von den entsprechenden elektromagnetischen Wellen bleiben. In diesem Fall ist es außerdem zweckmäßig, wenn die Schaltbefehle bei Eintritt in die Sperrzone zu dem Stillegen ausgewählter Funktionen und bei Verlassen der Sperrzone zu deren Reaktivierung führt.

Eine andere Variante sieht vor, daß die Funkschnittstelle zwischen Abschaltgerät und elektronischem Gerät in der gesamten Sperrzone aufrechterhalten wird, d.h., daß die gesamte Sperrzone in dem Funkabdeckungbereich des Abschaltgerätes liegt. Durch diese Maßnahme wird die Sicherheit, daß tatsächlich ein Abschalten erfolgt, wesentlich erhöht.

Um eine mißbräuchliche Abschaltung von Geräten zu vermeiden, ist vorgesehen, daß die Schaltbefehle mit einem Sicherheitscode verschlüsselt werden.

Um unangenehme Unterbrechungen eines Gespräches zu vermeiden, wird bei einer weiteren Variante ein Mobilteil, welches in aktiver Verbindung mit einer Basisstation steht, bei Erhalt eines Schaltbefehls erst nach einer Vorankündigung und unter Einhaltung einer Schonzeit abgeschaltet.

Es ist empfehlenswert, daß ein Mobilteil nach Erhalt der Schaltbefehle in dem zugehörigen Mobilfunknetz eingebucht bleibt bzw. daß ein Mobilteil nach Erhalt der Schaltbefehle über eine Ausbuchungsmeldung aktiv ausgebucht wird, z.B. im GSM-System durch eine IMSI-detach-Meldung. Um eine relative Erreichbarkeit des Benutzers aufrecht zu erhalten, kann nach Erhalt eines Schaltbefehles für das Mobilteil in dem Mobilfunknetz eine Gesprächsumlenkung zu einer Mailbox aktiviert werden.

Die Vorteile der Erfindung kommen insbesondere bei Verwendung eines Mobilteils bzw. eines Abschaltgeräts in einem Mobilfunksystem zur Geltung.

Die Erfindung samt weiteren Vorteilen ist im folgenden an Hand beispielsweiser Ausführungsformen näher erläutert, die in der Zeichnung veranschaulicht sind. In dieser zeigen
Fig.1 schematisch einen Teil einer Funkzelle eines Mobilfunksystems mit zwei Sperrzonen und Abschaltgeräten,
Fig.2 in einem Blockschaltbild ein Abschaltgerät gemäß der Erfindung,
Fig.3 in einem Blockschaltbild ein Mobilteil, das entsprechend der Erfindung ausgebildet ist,
Fig.4 gleichfalls schematisch in größerer Darstellung eine Sperrzone mit einem Abschaltgerät und einem Mobilteil und dem Anschluß des Abschaltgerätes über verschiedene Schnittstellen,
Fig.5 in einem Ablaufdiagramm eine Möglichkeit der Autorisierung eines Abschaltgerätes,
Fig.6 gleichfalls in einem Ablaufdiagramm eine Möglichkeit der Autorisierung bei Netzstützung des Abschaltgerätes und
Fig.7 in einem Ablaufdiagramm noch eine Möglichkeit der Autorisierung bei einem netzgestützten Abschaltgerät.

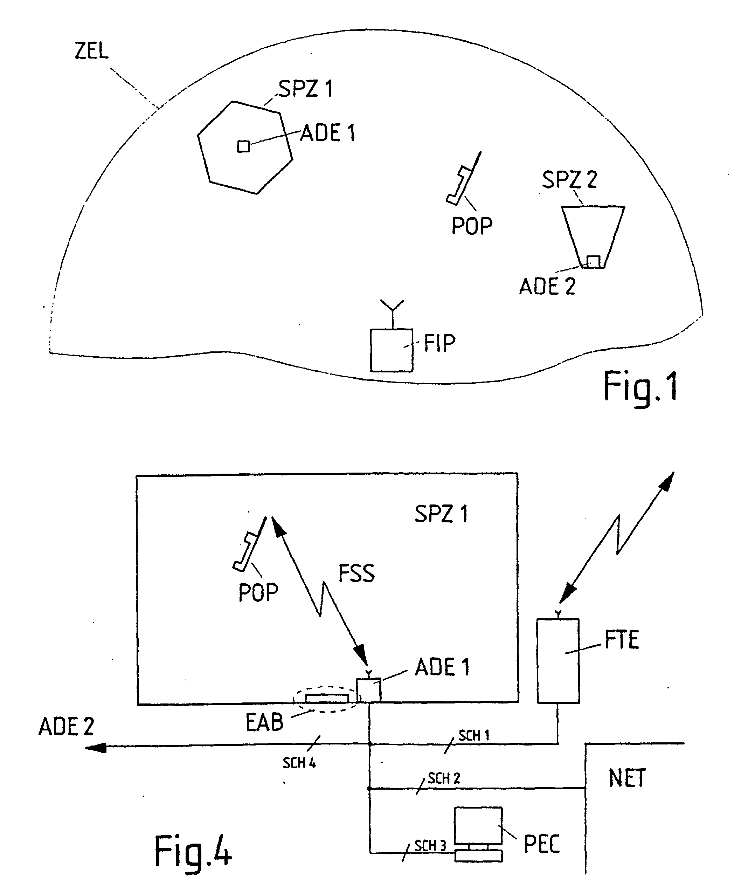

Fig. 1 zeigt eine Basisstation FIP eines Mobilfunksystems, beispielsweise eines GSM-Systems mit einer Funkzelle ZEL, in welcher zwei Sperrzonen SPZ1 und SPZ2 vorhanden sind, z.B. eine Intensivstation und ein Theatersaal. Jeder Sperrzone ist ein Abschaltgerät ADE1 bzw. ADE2 zugeordnet, dem die Aufgabe zukommt, bestimmte Funktionen eines Mobilteils POP abzuschalten oder stillzulegen, sobald dieses in eine Sperrzone eintritt.

Wenngleich im folgenden vorwiegend über Mobilteile eines GSM-Systems gesprochen wird, so muß betont werden, daß dieses Mobilfunksystem für die Erfindung nicht Voraussetzung ist. Vielmehr kann die Erfindung im Zusammenhang auch mit anderen Systemen, z.B. Schnurlossystem nach dem DECT-Standard, etc. angewendet werden.

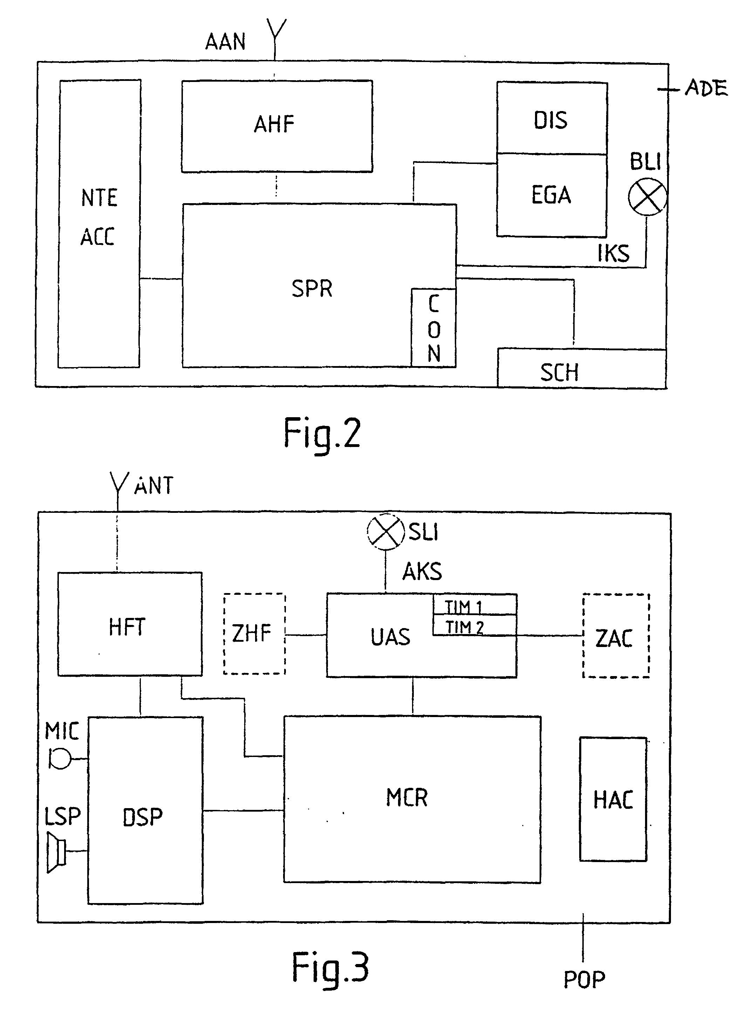

In Fig. 2 vorgreifend erkennt man, daß ein Abschaltgerät ADE einen HF-Teil AHF besitzt, dem zumindest eine Antenne AAN zugeordnet ist. Je nach Ausführung des Systems kann der HF-Teil AHF z.B. im MHz- oder GHz-Bereich ausgelegt sein. Weiters ist ein Signalprozessor SPR zur Steuerung der Funktionen des Abschaltgerätes vorhanden, wobei ein Zähler CON angedeutet ist. Das Gerät ADE kann weiters eine Anzeige DIS, z.B. ein LCD-Display, und eine Eingabetastatur EGA aufweisen. Ein Blinklicht BLI oder dergleichen kann von einem Indikatorsignal IKS angesteuert werden.

Im allgemeinen wird auch eine Schnittstelle SCH, ein Netzteil NTE sowie ein Netzausfälle überbrückender Akkumulator ACC vorgesehen sein.

Aus Fig. 3 geht der prinzipielle Aufbau eines Mobilteils POP hervor, das in einem System nach der Erfindung verwendet werden kann. Ein Mikrocontroller MCR steuert die wesentlichen Funktionen der einzelnen Einheiten. Diese sind im wesentlichen ein HF-Teil HFT mit einer Antenne ANT, ein digitaler Signalprozessor DSP mit Mikrophon MIC und Lautsprecher LSP eine Steuerung UAS für einen Sicherheits-Signalisierungskanal UAC, die zwei Zeitgeber TIM1, TIM2 aufweist, ein von einem Ankündigungssignal AKS gesteuertes Signallicht SLI od. dgl., gegebenenfalls ein zusätzlicher HF-Teil ZHF, ein Hauptakkumulator HAC und gegebenenfalls ein Zusatzakkumulator ZAC.

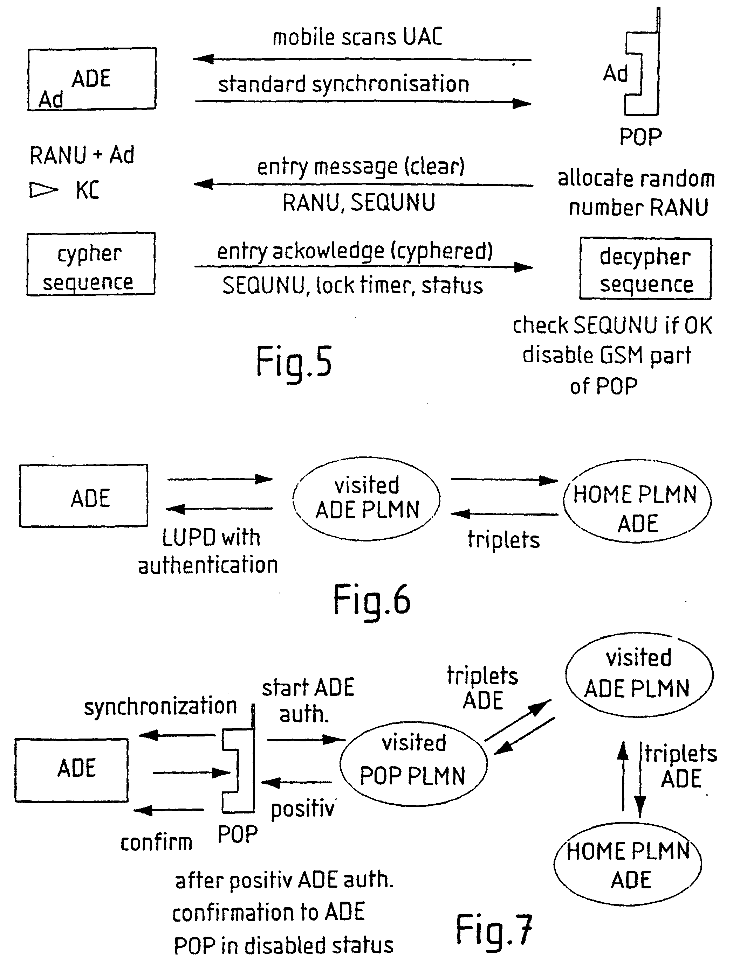

Unter Bezugnahme auf Fig.4 soll zunächst die prinzipielle Funktionsweise der Erfindung erläutert werden. Bei oder in einer Sperrzone SPZ1 ist ein Abschaltgerät ADE1 vorgesehen, welches über eine Antenne einen Ein/Austrittsbereich EAB abdeckt, d.h. mit ausgestrahlten Schaltbefehlen versorgt. Je nach Ausführung des Systems kann das Abschaltgerät ADE1 völlig für sich allein arbeiten oder über eine Schnittstelle SCH1 an ein Funkteil FTE angeschlossen sein, welches eine Verbindung zu einem Mobilfunknetz aufrecht erhält. Möglich ist weiters eine Verbindung zu einem Festnetz NET über eine Schnittstelle SCH2, zu einem Personalcomputer PEC über eine Schnittstelle SCH3 und zu einem oder mehreren anderen Abschaltgerätes ADE2 über eine Schnittstelle SCH4.

Sobald ein Mobilteil POP in den Funkbereich des Abschaltgerätes ADE1, d.h. in den Ein/Austrittsbereich EAB kommt, werden die Schaltbefehle des Gerätes ADE1 entweder über ein eigenes HF-Teil ZHF oder auf einem eigens reservierten Kanal im Rahmen des Mobilfunknetzes empfangen. Üblicherweise arbeiten Mobilfunkgeräte nach einem TDMA-Verfahren, sodaß für den Sicherheits-Signalisierungskanal UAC bestimmte Frequenzen/Zeitschlitze bereitgestellt werden.

Nach Erhalt der Schaltbefehle werden beispielsweise sämtliche Funktionen des Mobilfunkteils POP - ausgenommen der Empfang von Schaltbefehlen - stillgelegt. Möglich ist weiters, daß praktisch sämtliche Funktionen stillgelegt wurden, jedoch ein Zeitgeber TIM1 zu laufen beginnt, welcher nach einer Ruhezeit die Funktionen wieder aktiviert. Diese Ruhezeit kann auch über die Schaltbefehle vorgegeben werden. Überdies kann vorgesehen sein, daß privilegierte Mobilteile nicht, in geringerem Umfang oder für kürzere Zeit stillgelegt werden.

Vorteilhafterweise kann ein Schaltbefehl auch eine Information enthalten, wonach zwischen weitgehender Stillegung der Funktionen oder nur Stillegung, z.B. des Tonrufes unterschieden wird. In Sperrzonen, in welchen nicht Sicherheitsaspekte vorrangig sind, wie in Kinosälen etc. genügt es, wenn der Tonruf von Mobilteilen abgeschaltet wird.

Falls das Abschaltgerät ADE1 lediglich den Ein/Austrittsbereich EAB abdeckt, muß entweder die oben erwähnte Ruhezeit eingehalten werden oder eine Reaktivierung. der Funktionen des Mobilteiles POP, sobald es erneut den Ein/Austrittsbereich EAB passiert und Schaltbefehle erhält. Im allgemeinen wird es jedoch vorzuziehen sein, wenn das Abschaltgerät ADE1 die gesamte Sperrzone SPZ1 abdeckt, sodaß ständig eine Funkschnittstelle FSS zwischen Mobilteil POP und Abschaltgerät ADE1 besteht. Dann können beispielsweise die relevanten Funktionen des Mobilteils POP solange stillgelegt sein, solange regelmäßig Schaltbefehle empfangen werden. Erst wenn eine bestimmte Zeit lang keine Schaltbefehle empfangen wurden, können die Funktionen reaktiviert werden.

Mit Vorteil ist ein Mobilteil POP dazu eingerichtet, nach Erhalt von Schaltbefehlen deren Erhalt mit Rückmeldungen zu bestätigen. Nähere Details dazu werden noch weiter unten gegeben.

Der Zeitgeber TIM2 in der Steuerung UAC des Mobilteils POP dient zur Vorgabe einer Schonzeit. Darunter ist zu verstehen, daß bei Erhalt von Schaltbefehlen im Gesprächszustand des Mobilteils POP keine sofortige Stillegung erfolgt, sondern diese erst nach Ablauf der Schonzeit durchgeführt wird, um Gespräche nicht abrupt zu unterbrechen. Gleichzeitig wird bei Erhalt der Schaltbefehle ein Ankündigungssignal AKS ausgelöst, das ein Signallicht SLI auslösen und/oder zu akustischen Warnsignalen führen kann.

Die oben erwähnte Abdeckung der gesamten Sperrzone SPZ1 durch das Abschaltgerät ADE1 ist auch dann erforderlich, wenn eine mißbräuchliche Verwendung des Mobilteils POP vermieden werden soll. Durch eine leere oder entfernte Batterie des Mobilteils ist nämlich eine Lücke bei der Zugangskontrolle gegeben. Wenn das Gerät nicht empfangen kann, kann auch ein Schaltbefehl nicht empfangen, registriert und zur Ausführung gebracht werden. Kommt es erst nach Durchschreiten des

Ein/Austrittsbereiches zu einem Austausch der Gerätebatterie, so würde eine Stillegung der entsprechenden Funktionen ohne Aufrechterhaltung einer ständigen Funkschnittstelle in der gesamten Sperrzone SPZ1 nicht erfolgen. Im allgemeinen wird die Funkabdeckung der gesamten Sperrzone SPZ1 kein Problem darstellen, da man für die Übermittlung der Schaltbefehle einerseits Frequenzen wählen könnte, die nicht in einem Frequenzbereich gefährdeter Apparaturen etc. liegen, und weil andererseits die für die Übermittlung der Schaltbefehle erforderliche Feldstärke innerhalb der Sperrzone nur äußerst gering sein muß.

Im folgenden sollen noch die Sicherheits- und Autorisierungsaspekte sowohl bei netzunabhängigen als auch bei netzgestützten Abschaltgeräten erörtert werden. Bezüglich des GSM-Systems sei hierzu auf die folgenden ETSI-Empfehlungen verwiesen: GSM 02.09 "security aspects" und GSM 03.20 "security related network functions" bezüglich des DECT-Systems auf ETS 300 175-5/ETS 300 175-7 "security features".

Soferne das Abschaltgerät ADE keinem Netz zugeordnet ist, muß für die Sicherheit ein geheimer Algorithmus Adsorgen, der sich sowohl in dem Mobilteil POP als auch in dem Abschaltgerät ADE befindet. Mit Hilfe dieses Algorithmus wird die Signalisierung am Sicherheits-Signalisierungskanal UAC verschlüsselt. Wie ein solcher Verschlüsselungsvorgang ablaufen kann, zeigt das Ablaufdiagramm nach Fig.5. Das Mobilteil POP sucht am vereinbarten Kanal bzw. in einem definierten Bereich und synchronisiert sich mit dem Abschaltgerät ADE beispielsweise auf einem bestimmten Zeitschlitz. Nach erfolgter Synchronisation sendet das Mobilteil POP eine "Entry Message" mit einer Zufallszahl RANU sowie mit einer Sequenznummer SEQUNU zu dem Abschaltgerät ADE. Dabei werden die Zufallszahl und die Sequenznummer durch das Mobilteil POP vergeben. Die Übermittlung dieser Nachricht erfolgt noch unverschlüsselt und daraufhin wird in dem Abschaltgerät mit Hilfe des dort vorhandenen Algorithmus Ad ein Schlüssel KC ermittelt und mit diesem die nachfolgende "Entry Acknowledge"-Meldung verschlüsselt. Das Mobilteil POP empfängt diese Nachricht und benutzt seinerseits wieder den Algorithmus Ad um die Nachricht zu entschlüsseln. Dabei erfolgt eine Plausibilitätsüberprüfung auf die gespiegelte Sequenznummer SEQUNU. Ist die Überprüfung erfolgreich, so wird beispielsweise eine Ruhezeit für den Zeitgeber TIM1 ("Lock Timer") übernommen und die Abschaltung wird durchgeführt.

Bei einer netzgestützten Lösung gemäß Fig.6 ist das Abschaltgerät ADE einem Netz, hier einem GSM-Netz zugeordnet. Durch das Aktivieren des Abschaltgerätes ADE erfolgt eine Meldung LUPD ("Location Update") zum Netz hin. Dabei ist als Standard eine Authentifizierung vorzusehen, ebenso bei den folgenden periodischen "Location Updates". Es ist somit eine neue Endgeräteklasse, nämlich Abschaltgeräte ADE, administrativ in einem GSM-Netz vorzusehen und die Authentifizierung für diese Geräte ist unabhängig von den Standardnetzeinstellungen abzuleiten.

Mit der Registrierung eines Abschaltgerätes ADE ist neben einer netzseitigen Sperrung auch eine vergebührung möglich. Der Diebstahl eines Abschaltgerätes ADE ist in diesem Fall kein Problem, da eine unberechtigte Inbetriebnahme nicht erfolgen kann.

Natürlich kann der Fall eintreten, daß ein netzgestütztes Abschaltgerät ADE keinen Zugang zu einem Netz findet, beispielsweise wenn sich das Abschaltgerät ADE an Bord eines Flugzeuges befindet, und dieses auf einem Flughafen ohne entsprechende Mobilfunkversorgung Passagiere aufnimmt. In diesem Fall, ohne Authentifizierung gegenüber dem gesuchten Netz, werden dennoch Schaltbefehle ausgesendet, um ein Abschalten von Mobilteilen in der Gefahrenzone zu ermöglichen. Allerdings wird nun der bereits genannte Zähler CON inkrementiert und ab einem gewissen Zählerstand wird ein weiteres Aussenden von Schaltbefehlen unterbunden. Auch dies ist ein Mittel gegen einen Mißbrauch eines beispielsweise entwendeten Abschaltgerätes.

Unter Zuhilfenahme der Fig. 7 ist noch eine erweiterte Lösung beschrieben. Wenn man davon ausgeht, daß es nicht genügt, das Abschaltgerät ADE gegenüber einem Netz zu authentifizieren, was ein normaler Vorgang wäre, wenn das Abschaltgerät ADE als spezielles GSM-Endgerät definiert ist, sondern das jeweilige Mobilteil POP bei jedem Kontakt mit einem Abschaltgerät ADE dessen Legalität überprüfen muß, so gelten folgende Überlegungen.

Bei jedem Mobilteil POP, welches beispielsweise den Ein/Austrittsbereich passiert, muß eine Authentifizierung des Abschaltgerätes ADE gegenüber dem Mobilteil POP erfolgen.

Das Abschaltgerät ADE ist als Bestandteil eines spezifischen Netzes (Home-PLMN ADE) realisiert und damit genau in diesem Netz registriert. Damit muß das jeweilige Mobilteil POP, welches sich gerade im Zugangsbereich des Abschaltgerätes ADE befindet, die Authentifizierung für das Abschaltgerät ADE über das "Visited Network" des Mobilteils POP anstoßen. Da die, in einem GSM-System, für das Abschaltgerät ADE erzeugten "Authentication Triplets" aber nur in dem Netz, in dem sich das Abschaltgerät ADE eingebucht hat, zur Verfügung stehen, ist hier, neben der neuen Endegerätefunktion des Anstoßens einer Authentifizierung für ein "fremdes" Gerät (Abschaltgerät ADE) die folgende Netzfunktion erforderlich.

Von dem "Visitor Location Register" VLR, in dem sich das abzuschaltende Mobilteil POP befindet, ist mittels eines neuen Protokolls ein "Authentication Triplet" aus dem VLR-Register, in dem sich das Abschaltgerät ADE befindet, anzufordern.

Falls ein Netz diese besondere Authentifizierung nicht unterstützt, sollte daraus das bereits oben genannte Indikatorsignal IKS abgeleitet werden, damit feststellbar ist, daß jemand ein Mobilteil POP mit sich führt, welches nicht abgeschaltet wird.

Die Erfindung wurde vorgehend immer im Zusammenhang mit einem Mobilteil POP eines Mobilfunksystems beschrieben, doch ist sie prinzipiell auch auf andere elektronische Geräte anwendbar, deren Inbetriebnahme bzw. Inbetriebbleiben in gewissen Bereichen unerwünscht bzw. gefährlich ist. Es kann sich dabei beispielsweise um CD-Player, Rundfunkgeräte, etc. handeln. Auch solche Geräte lassen sich in die Erfindung mit einbeziehen, vorausgesetzt sie enthalten zumindest einen Empfänger für die Abschaltbefehle eines Abschaltgerätes ADE.

Zu erwähnen ist schließlich ein Nebeneffekt der Verwendung von Abschaltgeräten ADE, der darin besteht, daß sich mit Hilfe eines Abschaltgerätes ADE auch andere Informationen übertragen lassen. Beispielsweise können in Geschäftsbereichen Informationen über Angebote, Preise, Adressen, etc. nebenbei übertragen werden und auf einer Anzeige des Mobilteils POP angezeigt werden. Auch könnte spezifische Software über das Abschaltgerät ADE in das Mobilteil POP oder ein anderes elektronisches Gerät eines Benutzers geladen werden.

## Patentansprüche

1. Verfahren zum Abschalten von Funktionen eines elektronischen Geräts, bei dem örtlich beschränkt für Sperrzonen (SPZ) seitens eines Abschaltgeräts (ADE) über eine Funkschnittstelle (FSS) Schaltbefehle an einen Empfänger des elektronischen Geräts (POP) gesandt werden und in diesem nach Erhalt der Schaltbefehle ausgewählte Funktionen stillgelegt bzw. wieder aktiviert werden
**dadurch gekennzeichnet,**
**daß** das Abschaltgerät (ADE) einem Kommunikationsnetz (NET) zugeordnet wird und daß bei Inbetriebnahme des Abschaltgeräts (ADE) dessen Authentifizierung dem Netz gegenüber gefordert wird.

2. Verfahren nach Anspruch 1,
**dadurch gekennzeichnet, daß** das Abschaltgerät (ADE), falls es kein zugehöriges Netz findet bzw. ein solches nicht vorhanden ist, demgegenüber eine Authentifizierung möglich ist, dennoch Schaltbefehle abgibt.

3. Verfahren nach Anspruch 1 oder 2,
**dadurch gekennzeichnet, daß** nach mehrmaligem Aktivieren des Abschaltgeräts (ADE) ohne Auffinden eines zugehörigen Netzes die Abgabe von Schaltbefehlen gesperrt wird.

4. Verfahren nach einem der vorhergehenden Ansprüche,
**dadurch gekennzeichnet, daß** die Forderung nach Authentifizierung des Abschaltgeräts (ADE) seitens des elektronischen Geräts (POP) ausgelöst wird, nachdem dieses Schaltbefehle erhalten hat.

5. Verfahren nach Anspruch 4,
**dadurch gekennzeichnet, daß** seitens des Abschaltgeräts (ADE) ein Indikatorsignal (IKS) abgegeben wird, falls das Netz die vorgesehene Authentifizierung nicht unterstützt.

6. Verfahren nach einem der vorhergehenden Ansprüche,
**dadurch gekennzeichnet, daß** die Schaltbefehle über einen vorgegebenen, für diesen Zweck reservierten Sicherheits-Signalisierungskanal (UAC) gesendet werden.

7. Verfahren nach einem der vorhergehenden Ansprüche,
**dadurch gekennzeichnet, daß** der Erhalt der Schaltbefehle bzw. deren Durchführung an das Abschaltgerät bestätigt wird.

8. Verfahren nach einem der vorhergehenden Ansprüche,
**dadurch gekennzeichnet, daß** das elektronische Gerät (POP) ein Mobilteil (POP) eines Mobilfunknetzes ist.

9. Verfahren nach einem der vorhergehenden Ansprüche,
**dadurch gekennzeichnet, daß** ein Stillegen von Funktionen auf Grund von Schaltbefehlen lediglich für eine vorgebbare Ruhedauer erfolgt.

10. Verfahren nach Anspruch 9,
**dadurch gekennzeichnet, daß** die Ruhedauer seitens des Abschaltgeräts (ADE) dem elektronischen Gerät (POP) über die Funkschnittstelle mittels der Schaltbefehle vorgegeben wird.

11. Verfahren nach einem der vorhergehenden Ansprüche,
**dadurch gekennzeichnet, daß** die Schaltbefehle mit einem Sicherheitscode verschlüsselt werden.

12. Verfahren nach einem der vorhergehenden Ansprüche,
**dadurch gekennzeichnet, daß** das elektronische Gerät ein Mobilteil (POP) eines Mobilfunknetzes ist, welches in aktiver Verbindung mit einer Basisstation (FIP) steht, und bei Erhalt eines Schaltbefehls erst nach einer Vorankündigung und unter Einhaltung einer Schonzeit abgeschaltet wird.

13. Verfahren nach einem der Ansprüche 1 bis 11,
**dadurch gekennzeichnet, daß** das elektronische Gerät ein Mobilteil (POP) eines Mobilfunknetzes ist und daß das Mobilteil (POP) nach Erhalt der Schaltbefehle in einem zugehörigen Mobilfunknetz eingebucht bleibt.

14. Verfahren nach einem der Ansprüche 1 bis 11,
**dadurch gekennzeichnet, daß** daß das elektronische Gerät ein Mobilteil (POP) eines Mobilfunknetzes ist und daß das Mobilteil (POP) nach Erhalt der Schaltbefehle über eine Ausbuchungsmeldung aktiv ausgebucht wird.

15. System zum Abschalten von Funktionen eines elektronischen Gerätes, bei dem ein Abschaltgerät (ADE) im Bereich einer Sperrzone (SPZ) vorgesehen und dazu eingerichtet ist, örtlich beschränkt über eine Funkschnittstelle (FSS) Schaltbefehle an einen Empfänger (HFT, ZHF) des elektronischen Geräts (POP) zu senden, und dieses dazu eingerichtet ist, nach Erhalt der Schaltbefehle ausgewählte Geräteeinheiten bzw. -funktionen stillzulegen oder wieder zu aktivieren
**dadurch gekennzeichnet,**
**daß** das Abschaltgerät (ADE) einem Kommunikationsnetz (MET) zugeordnet ist, welches bei Inbetriebnahme des Abschaltgeräts zur Abgabe einer Authentifizierungsanfrage an das Abschaltgerät (ADE) eingerichtet ist.

16. System nach Anspruch 15,
**dadurch gekennzeichnet, daß** das Abschaltgerät (ADE) zur Aussendung von Schaltbefehlen auch dann eingerichtet ist, falls kein zugehöriges Kommunikationsnetz auffindbar ist, demgegenüber eine Authentifizierung möglich ist.

17. System nach Anspruch 16,
**dadurch gekennzeichnet, daß** in dem Abschaltgerät (ADE) ein Zähler (CON) vorgesehen ist, dessen Stand bei jedem Aktivieren des Gerätes ohne Authentifizierung erhöht wird und das Abschaltgerät dazu eingerichtet ist, sich bei Erreichen eines vorgegebenen Zählerstandes zu deaktivieren.

18. System nach Anspruch 16 oder 17,
**dadurch gekennzeichnet, daß** das elektronische Gerät ein Mobilteil (POP) eines Mobilfunknetzes ist und daß das Mobilteil (POP) dazu eingerichtet ist, nach Erhalt von Schaltbefehlen die Forderung nach Authentifizierung des Abschaltgeräts (ADE) über dieses an das Netz (NET) anzustoßen.

19. System nach Anspruch 18,
**dadurch gekennzeichnet, daß** das Abschaltgerät (ADE) sich gegenüber dem Mobilfunknetz authentisiert und dass es dazu eingerichtet ist, ein Indikatorsignal (IKS) abzugeben, falls ein Mobilfunknetz die vorgesehene Authentifizierung des Abschaltgerätes nicht unterstützt.

## Claims

1. Method for turning off functions of an electronic device, in which, with a local restriction for restricted zones (SPZ), a turn-off device (ADE) uses a radio interface (FSS) to transmit switching commands to a receiver in the electronic device (POP), and selected functions in this electronic device are deactivated or reactivated on receipt of the switching commands, **characterized in that** the turn-off device (ADE) is associated with a communication network (NET), and **in that**, when the turn-off device is put into service, its authentication with respect to the network is requested.

2. Method according to Claim 1, **characterized in that** the turn-off device (ADE) still outputs switching commands even if it cannot find an associated network or if there is no such network for which authentication is possible.

3. Method according to Claim 1 or 2, **characterized in that** the output of switching commands is disabled after the turn-off device (ADE) has been repeatedly activated without finding an associated network.

4. Method according to one of the previous claims, **characterized in that** the request for authentication of the turn-off device (ADE) is triggered by the electronic device (POP) when it has received switching commands.

5. Method according to Claim 4, **characterized in that** the turn-off device (ADE) outputs an indicator signal (IKS) if the network does not support the intended authentication.

6. Method according to one of the preceding claims, **characterized in that** the switching commands are transmitted over a predetermined security signalling channel (UAC) reserved for this purpose.

7. Method according to one of the preceding claims, **characterized in that** receipt and execution of the switching commands are acknowledged to the turn-off device.

8. Method according to one of the preceding claims, **characterized in that** the electronic device (POP) is a mobile part (POP) of a mobile radio network.

9. Method according to one of the preceding claims, **characterized in that** functions are deactivated on account of switching commands only for a presettable quiescent period.

10. Method according to Claim 9, **characterized in that** the turn-off device (ADE) stipulates the quiescent period to the electronic device (POP) via the radio interface, using the switching commands.

11. Method according to one of the preceding claims, **characterized in that** the switching commands are encrypted with a security code.

12. Method according to one of the preceding claims, **characterized in that** the electronic device is a mobile part (POP) of a mobile radio network which is actively connected to a base station (FIP) and is turned off, on receipt of a switching command, only after advance notice and with observance of a courtesy period.

13. Method according to one of Claims 1 to 11, **characterized in that** the electronic device is a mobile part (POP) of a mobile radio network, and **in that** the mobile part (POP) remains logged on in an associated mobile radio network on receipt of the switching commands.

14. Method according to one of Claims 1 to 11, **characterized in that** the electronic device is a mobile part (POP) of a mobile radio network, and **in that** the mobile part (POP) is actively logged off by means of a logoff message on receipt of the switching commands.

15. System for turning off functions of an electronic device, in which a turn-off device (ADE) is provided in the area of a restricted zone (SPZ), and is set up to transmit, with a local restriction, switching commands to a receiver (HFT, ZHF) in the electronic device (POP) via a radio interface (FSS), and said electronic device is set up to deactivate and reactivate selected device units or functions on receipt of the switching commands, **characterized in that** the turn-off device (ADE) is associated with a communication network (NET) which is set up to output an authentication enquiry to the turn-off device when the turn-off device is put into service.

16. System according to Claim 15, **characterized in that** the turn-off device (ADE) is set up to transmit switching commands even if no associated communication network can be found for which authentication is possible.

17. System according to Claim 16, **characterized in that** the turn-off device (ADE) contains a counter (CON) whose value is increased whenever the device is activated without authentication, and the turn-off device is set up to deactivate itself when a preset counter value is reached.

18. System according to Claim 16 or 17, **characterized in that** the electronic device is a mobile part (POP) of a mobile radio network, and **in that** the mobile part (POP) is set up to initiate the request to the network (NET) for authentication of the turn-off device (ADE) via said turn-off device on receipt of switching commands.

19. System according to Claim 18, **characterized in that** the turn-off device (ADE) is authenticated with respect to the mobile radio network, and **in that** it is set up to output an indicator signal (IKS) if a mobile radio network does not support the intended authentication of the turn-off device.

## Revendications

1. Procédé pour le débranchement de fonctions d'un appareil électronique, dans lequel des ordres de commutation sont envoyés par l'intermédiaire d'une interface radio (FSS) par un appareil de débranchement (ADE) de manière restreinte dans l'espace à des zones interdites (SPZ) à un récepteur de l'appareil électronique (POP) et dans ce dernier, des fonctions sélectionnées sont arrêtées resp. réactivées après réception des ordres de commutation,
**caractérisé en ce que** l'appareil de débranchement (ADE) est associé à un réseau de communication (NET) et **en ce que** lors de la mise en service de l'appareil de commutation (ADE), son authentification vis-à-vis du réseau est demandée.

2. Procédé selon la revendication 1, **caractérisé en ce qu'**au cas où l'appareil de débranchement (ADE) ne trouve pas de réseau associé resp. qu'il n'existe pas de réseau vis-à-vis duquel il peut s'authentifier, l'appareil de débranchement émet malgré tout des ordres de commutation.

3. Procédé selon la revendication 1 ou 2, **caractérisé en ce qu'**après que l'appareil de débranchement (ADE) a été activé plusieurs fois sans trouver un réseau associé, l'émission des ordres de débranchement est bloquée.

4. Procédé selon l'une des revendications précédentes, **caractérisé en ce que** la demande d'authentification de l'appareil de débranchement (ADE) est déclenchée par l'appareil électronique (POP) après qu'il a reçu des ordres de commutation.

5. Procédé selon la revendication 4, **caractérisé en ce qu'**un signal d'indicateur (IKS) est délivré par l'appareil de débranchement (ADE) au cas où le réseau ne soutient pas l'authentification prévue.

6. Procédé selon l'une des revendications précédentes, **caractérisé en ce que** les ordres de commutation sont envoyés par un canal de signalisation de sécurité (UAC) prédéterminé et réservé à cet effet.

7. Procédé selon l'une des revendications précédentes, **caractérisé en ce que** la réception des ordres de commutation resp. leur exécution sont confirmées à l'appareil de débranchement.

8. Procédé selon l'une des revendications précédentes, **caractérisé en ce que** l'appareil électronique (POP) est un appareil de radiocommunication mobile (POP) d'un réseau de radiocommunication mobile.

9. Procédé selon l'une des revendications précédentes, **caractérisé en ce que** la mise à l'arrêt de fonctions à partir des ordres de commutation a lieu uniquement pendant une durée de pause prédéterminable.

10. Procédé selon la revendication 9, **caractérisé en ce que** la durée de pause de l'appareil électronique (POP) au moyen des ordres de commutation est imposée par l'appareil de débranchement (ADE) par l'intermédiaire d'un interface radio.

11. Procédé selon l'une des revendications précédentes, **caractérisé en ce que** les ordres de commutation sont cryptés par un code de sécurité.

12. Procédé selon l'une des revendications précédentes, **caractérisé en ce que** l'appareil électronique est un appareil de radiocommunication mobile (POP) d'un réseau de radiocommunication mobile qui est en liaison active avec un poste de base (FIP), et qui lors de la réception d'un ordre de commutation n'est débranché qu'après avertissement préalable et respect d'un temps d'attente.

13. Procédé selon l'une des revendications 1 à 11, **caractérisé en ce que** l'appareil électronique est un appareil de radiocommunication mobile (POP) d'un réseau de radiocommunication mobile et **en ce que** l'appareil de radiocommunication mobile (POP) reste raccordé à un réseau de radiocommunication mobile associé après réception des ordres de commutation.

14. Procédé selon l'une des revendications 1 à 11, **caractérisé en ce que** l'appareil électronique est un appareil de radiocommunication mobile (POP) d'un réseau de radiocommunication mobile et **en ce que** l'appareil de radiocommunication mobile (POP) est débranché activement par un message de débranchement après réception des ordres de commutation.

15. Système pour le débranchement de fonctions d'un appareil électronique, dans lequel est prévu un appareil de débranchement (ADE) qui est adapté pour émettre, de façon restreinte dans l'espace à une zone interdite (SPZ) et par l'intermédiaire d'une interface radio (FSS), des ordres de commutation à un récepteur (HFT, ZHF) de l'appareil électronique (POP), ce damier étant adapté pour mettre à l'arrêt ou réactiver des unités resp. fonctions sélectionnées de l'appareil après réception des ordres de commutation,
**caractérisé en ce que** l'appareil de débranchement (ADE) est associé à un réseau de communication (NET) qui est adapté pour émettre une demande d'authentification à l'appareil de débranchement (ADE) lors de la mise en service de l'appareil de débranchement.

16. Système selon la revendication 15, **caractérisé en ce que** l'appareil de débranchement (ADE) est adapté pour émettre des ordres de commutation même au cas où aucun réseau de communication associé, via-à-vis duquel une authentification est possible, ne peut être trouvé.

17. Système selon la revendication 16, **caractérisé en ce que** dans l'appareil de débranchement (ADE) est prévu un compteur (CON) dont l'état est incrémenté lors de chaque activation de l'appareil sans authentification, l'appareil de débranchement étant adapté pour se désactiver lorsqu'un état prédéterminé du compteur est atteint.

18. Système selon la revendication 16 ou 17, **caractérisé en ce que** l'appareil électronique est un appareil de radiocommunication mobile (POP) d'un réseau de radiocommunication mobile et **en ce que** l'appareil de radiocommunication mobile (POP) est adapté pour provoquer la demande d'authentification de l'appareil de débranchement (ADE) au réseau (NET) par l'appareil de débranchement après réception d'ordres de commutation.

19. Système selon la revendication 18, **caractérisé en ce que** l'appareil de débranchement (ADE) s'authentifie vis-à-vis du réseau de radiocommunication mobile, et **en ce qu'**il est adapté pour délivrer un signal d'indicateur (IKS) au cas où un réseau de radiocommunication mobile rie soutient pas l'authentification prévue de l'appareil de débranchement.
